# EUROPEAN PATENT SPECIFICATION

(11) **EP 3 087 860 B1**
(45) Date of publication and mention of the grant of the patent: **04.11.2020**
(21) Application number: 16163079.3
(22) Date of filing: 31.03.2016
(51) Int. Cl.: A43D 1/02

(54) **APPARATUS, METHOD AND SYSTEM FOR ANALYZING FOOT**
VORRICHTUNG, VERFAHREN UND SYSTEM ZUR ANALYSE EINES FUSSES
APPAREIL, PROCÉDÉ ET SYSTÈME D'ANALYSE DE PIED

(30) Priority: 31.03.2015 FI 20155225
(43) Date of publication of application: 02.11.2016
(73) Proprietor: Sievin Jalkine Oy, 85310 Sievi as (FI)
(72) Inventor: Järvikuona, Jari, 84100 Ylivieska (FI); Kiljala, Mika, 84100 Ylivieska (FI); Lambacka, Riku, 85410 Sievi (FI); Jokinen, Juha, 85310 Sievi AS (FI); Kemppainen, Teppo, 84100 Ylivieska (FI)
(74) Representative: Berggren Oy, Helsinki & Oulu

(56) References cited:
- WO-A1-2004/037085
- JP-A- H11 101 623

## Description

### TECHNICAL FIELD

The invention relates to a measurement arrangement. In particular, the invention relates to producing at least measurement data of a foot.

### BACKGROUND

When choosing suitable shoes and shoe insoles, it is good to use some kind of device and method for measuring and analyzing the size and possibly also the shape of the foot. The measurement data may also be utilized to shape the insoles according to the shape of the foot, as well as to detect various misalignments of the foot. There are several different solutions and principles for measuring a foot. Some solutions require 3D modeling of the foot, which is especially useful for rehabilitation purposes, as well as for other medical purposes. However, for choosing suitable shoes and insoles, 2D modeling of the sole of the foot is sufficient; in addition, it is useful to model the height of the arch of the foot in order to achieve accurate analysis results. 3D modeling of the entire foot requires a considerably more complicated measuring device as well as more complex processing of the measurement data and, furthermore, 3D modeling is often more time-consuming than 2D modeling.

A solution based on mechanical measurement is often simple to implement but mechanical measurement cannot provide information about the shape of the foot. Furthermore, the measurement is completely manual and, in order to digitally utilize the measurement data, one needs to manually enter the data in memory for analysis. The size and shape of the foot may also be determined by producing molds of the feet through pressing the feet into a moldable substance. The molds may then be used directly, for example, to shape the insoles, or the molds may be photographed from different angles in order to analyze the size and shape of the foot based on the photographs.

One way of analyzing the size and shape of the foot is to photograph the foot against a background from many different angles and to calculate the size and shape of the foot from the combined photographs. This method requires a background with a special texture and color, as well as just the right kind of lighting so that the outlines of the foot may be clearly discerned from the background. It additionally requires several cameras or a movable camera so that the foot may be photographed from many different angles. Because of these requirements, the device used is complex and large. In addition, the measurement and the processing of the measurement data take time. Alternatively, the method may be based on a sock with a special high-contrast texture to be worn on the foot. The size and shape of the foot may be determined by photographing the foot wearing the specially-textured sock from different angles with several cameras or one movable camera in order to obtain a 3D model of the foot. This method always requires the use of a specially-textured sock.

In laser scanning, the size and shape of the foot are determined by scanning the foot either by means of a moving source of laser radiation or, alternatively, a moving detector, which may be a camera, for instance. A device based on scanning is often a complicated one, as it requires, among other things, a motor for moving the laser source or detector. Furthermore, the actual scanning takes time. In addition to laser scanning, a document scanner may also be used, which produces a 2D black and white image of the sole of the foot so that the size and shape of the foot may be determined through deduction based on the shades of gray in the image. Problems with this measurement method are caused by the lighting at the place of measurement, with lighting from above, in particular, causing problems for the analysis of the image. Furthermore, the measurement must always be carried out without socks, or barefoot.

The problem with many of the above-mentioned methods is that they are slow either in the actual measurement or in the processing of the measurement data because the device is complicated or the processing of the measurement data is complicated. The accuracy of slow methods suffers because for an accurate analysis the foot needs to remain in the exact same spot throughout the measurement. For example, when scanning a foot, the foot must remain in exactly the same spot for the entire duration of the scan so that the foot is not in a different position at different moments of the scan. Also, when photographing the foot with several cameras or from several angles with a single camera, the foot should stay still for the whole duration of imaging. Any movement of the foot will result in inaccuracy of the analysis result.

Furthermore, the lighting in the measurement environment may interfere with the measurement or analysis of the measurement data, leading to inaccuracy of the analysis result. In addition, some of the measurement methods require the subject to be barefoot during the measurement, which people may find uncomfortable. On the other hand, in methods based on the use of a special sock, all users have to use the same sock, which people may also be uncomfortable with.

Accordingly, there exists a need for a more advanced foot measurement method and device that solve the problems associated with existing solutions. In particular, it would be advantageous to provide a device that has a simple construction and a simple measurement method for photographing the foot. In addition, it is important that the effect of ambient light may be reduced in the measurement or analysis of measurement data. For the customer, it is also important that the method is applicable both on a foot wearing a sock and on a bare foot.

Patent application JP H11101623 A discloses a device for measuring 3D-shape of an object, such as s foot.

Patent application WO 2004/037085 A1 discloses an apparatus for defining the size and the shape of a foot.

### SUMMARY OF INVENTION

An objective of the invention is to provide an apparatus, method and system for analyzing a foot. Another objective of the invention is that the apparatus, method and system enable more advantageous analysis of a foot than prior-art solutions.

Some aspects below do not all form part of the invention.

The objectives of the invention are achieved through an apparatus, method and system presented in the independent claims.

According to a first aspect, an apparatus for producing measurement data of a foot is provided, wherein the foot, when being photographed, may be placed against a transparent surface, on a first side of the transparent surface. The apparatus comprises at least one light source; at least one optical element arranged to be placed in the line of propagation of a beam of light produced by the at least one light source for spreading out the beam of light into a set of patterns of light so that the patterns of light are projected directly from the optical element at least partly on the sole of the foot placed for photography; and a camera for directly photographing at least the patterns of light projected on the sole of the foot placed for photography, which patterns of light follow the shapes of the sole of the foot.

The spread angle of the optical element may determine the diffraction of the patterns of light.

At least one light source and camera may be placed in such mutual relationship that the image information produced by the camera enables determination of at least one characteristic of the foot through triangulation.

In addition, the apparatus may comprise a second set of patterns of light directed at least partly on the arch of the foot being photographed. The second set of patterns of light may be arranged to be produced by a second optical element arranged in the direction of propagation of a second beam of light that may be provided by one of the following: a beam of light separated from the first set of patterns of light, a beam of light produced by a second light source. The second set of patterns of light may be arranged on the arch of the foot placed for photography by at least one of the following: the second light source and second optical element, at least one reflecting element.

The light source may be a source of laser radiation and the optical element may be a diffractive optical element.

The apparatus may comprise two light sources and an optical element arranged to be placed in the line of propagation of the beam of light produced by each light source for spreading out the beam of light into at least one pattern of light, where the two light sources are arranged at a distance from each other in the height direction. The distance between the two light sources in the height direction may be 2-20 millimeters.

The apparatus comprises at least one additional light source for producing a beam of light directed on at least one side wall of the apparatus. At least one additional light source is a LED light. According to a second aspect, a method for producing measurement data of a foot is provided, wherein the foot, when placed for photography, may be placed against a transparent surface, on a first side of the transparent surface. The method comprises spreading out a beam of light into a set of patterns of light by at least one optical element arranged to be placed in the line of propagation of a beam light produced by at least one light source; projecting the spread-out set of patterns of light directly from the optical element at least partly on the sole of the foot placed for photography; and directly photographing the patterns of light projected on the sole of the foot placed for photography, which patterns of light follow the shapes of the sole of the foot.

In addition, the method may comprise producing a second beam of light by one of the following: a beam of light separated from the first set of patterns of light, a beam of light produced by a second light source; producing a second set of patterns of light by an optical element arranged in the direction of propagation of a second beam of light, where the optical element is arranged to be placed on a first side of a transparent surface; and directing the second set of patterns of light at least partly on the arch of the foot placed for photography by the second light source and second optical element or at least one reflecting element.

The method also comprises producing a beam of light by at least one additional light source and directing a beam of light produced by an additional light source on at least one side wall.

The method may be used for choosing a suitable and fitting shoe or insole for the foot placed for photography on the basis of foot characteristics measured. According to a third aspect, a system for analyzing a foot is provided, where the system comprises the above-described apparatus for producing measurement data and a control unit for processing measurement data.

The embodiments presented in this patent application are exemplary only, and a person skilled in the art will be able to implement the basic idea of the invention also in ways other than those described here. The description may in several places refer to an embodiment or embodiments, but this does not mean that the reference in question is directed to one described embodiment only or that the feature described is useful in one described embodiment only. Individual features of two or more embodiments may be combined, thus creating new embodiments of the invention.

### BRIEF DESCRIPTION OF THE DRAWINGS

The invention is below described in detail. In the description, reference is made to the accompanying drawings in which
FIG. 1 shows the spreading of a point-like beam of light into a set of laser patterns by a diffractive optical element.
FIG. 2a shows an apparatus according to an embodiment, not covered by the claims, for producing measurement data of a foot.
FIG. 2b shows an apparatus according to another embodiment , not covered by the claims, for producing measurement data of a foot.
FIG. 3a shows an apparatus according to an embodiment, not covered by the claims, for producing measurement data of a foot.
FIG. 3b shows an apparatus according to an embodiment of the invention for producing measurement data of a foot.
FIG. 3c shows an apparatus according to an embodiment of the invention for producing measurement data of a foot.
FIG. 4a shows an apparatus according to an embodiment of the invention for producing measurement data of a sole and arch of a foot, where the apparatus comprises one source of laser radiation.
FIG. 4b shows an apparatus according to an embodiment of the invention for producing measurement data of a sole and arch of a foot, where the apparatus comprises two sources of laser radiation.
FIG. 4c shows an apparatus according to an embodiment of the invention for producing measurement data of a sole and arch of a foot, where the apparatus comprises two sources of laser radiation.
FIG. 5a shows an apparatus according to an embodiment of the invention for producing measurement data of the soles of two feet, where the apparatus comprises one source of laser radiation.
FIG. 5b shows an apparatus according to an embodiment of the invention for producing measurement data of the soles of two feet, where the apparatus comprises two sources of laser radiation.
FIG. 6a shows an apparatus according to an embodiment of the invention for producing measurement data of the soles and arches of two feet, where the apparatus comprises two sources of laser radiation.
FIG. 6b shows an apparatus according to an embodiment of the invention for producing measurement data of the soles and arches of two feet, where the apparatus comprises three sources of laser radiation.
FIG. 7a shows an example of a method according to the invention for producing measurement data of a sole of a foot.
FIG. 7b shows an example of a method according to the invention for producing measurement data of a sole and arch of a foot.

### DESCRIPTION OF ADVANTAGEOUS EMBODIMENTS OF INVENTION

The invention relates to an apparatus that may be used for producing measurement data of a foot. The operation of the apparatus according to the invention is based on producing the measurement data through photographing patterns of light projected at least partly on the foot. The apparatus according to the invention comprises at least a light source to produce a beam of light, an optical element to spread out the beam of light into patterns of light projected on a foot being photographed, and a camera to photograph the patterns of light projected on the sole of the foot. The light source may be any light source that produces a beam of light which may be spread out by an optical element into patterns of light which are projected on a foot and which may be photographed with a camera. Light sources may comprise, for example, laser light, LED light, infrared light, fluorescent light or halogen light. The advantage of laser light in this field of application is that it is coherent and monochromatic, enabling the formation of a well-defined pattern of light. The optical element that spreads out the beam of light produced by the light source into patterns of light may be, for example, a lens, lens group, prism, diffractive optical element or any combination of the above. The invention further relates to a method for photographing a foot by means of an apparatus according to the invention. The image may also be analyzed so as to determine at least one characteristic of the foot, such as the length of the foot, width of the foot, or the height of the arch. Based on the at least one characteristic which has been determined, it will be possible, for example, to choose a shoe or insole which is suitable and of the right size for the foot being photographed. A beam of light means here at least part of the light produced by a light source, which beam of light comprises one or more individual rays of light and which beam of light may be used to implement the solution according to the invention.

In the following examples illustrating the invention, the light produced by the light source comprises laser light, and the optical element comprises a diffractive optical element. The complex microstructure of the thin surface of the diffractive optical element modulates the light that travels through it so that the light may be shaped into almost any pattern.

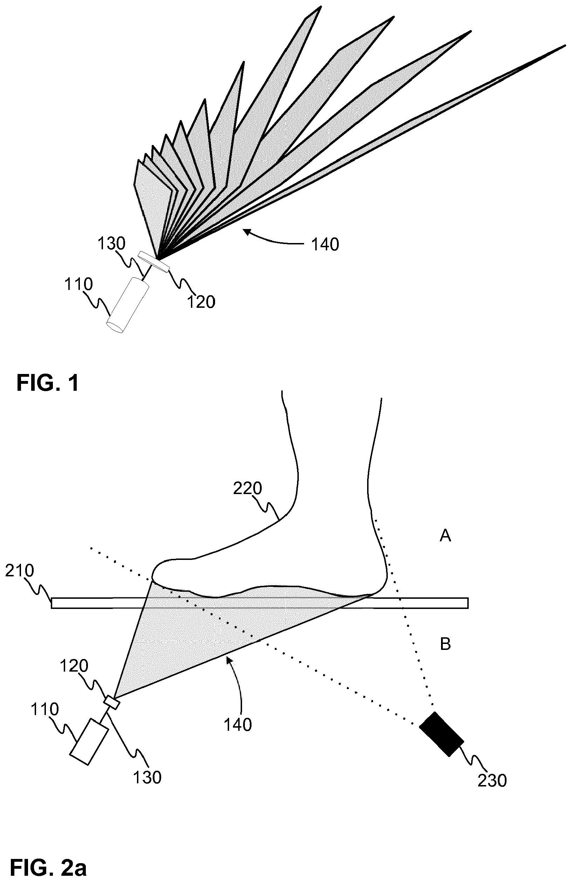

FIG. 1 shows an example of the spreading out of a point-like beam of laser light 130 into a set of laser patterns 140, where the light source comprises a source of laser radiation 110 and where a diffractive optical element 120 is arranged to be placed in the line of propagation of the point-like beam of laser light 130 produced by said source. The spreading laser patterns 140 may comprise, for instance, lines, arcs, squares, circles, triangles or other shapes. FIG. 1 shows a line laser pattern and, for the sake of clarity, all laser patterns in the drawings are hereinafter shown as line laser patterns, which, however, does not exclude other laser pattern shapes. The set of laser patterns 140 comprises one or more laser pattern which may be identical of different. The diffraction of the laser patterns 140 depends on the spread angle of the diffractive optical element 120. In addition, the characteristics of the diffractive optical element 120 determine the number of spread-out laser patterns 140. The number and spread angles of the laser lines shown in the drawings are examples only. Other numbers and spread angles of the laser lines are also possible. In FIG. 1, and also elsewhere in this application, the diffractive optical element is arranged to be separate from the source of laser radiation. Within the scope of the inventional idea of this invention, the diffractive optical element may be arranged in connection with the light source, such as a source of laser radiation.

FIG. 2a illustrates a first embodiment of the apparatus according to the invention in a side view of the foot 220 being photographed, wherein the foot 220 being photographed is placed against a transparent surface 210. In terms of transparency, the material of the surface is selected such that measurement data may be provided to the camera 230 so that the at least one characteristic may be determined. The material of the transparent surface 210 may be, for instance, glass, plastic or other similar transparent weight-bearing material. The transparent surface 210 may have a rectangular shape. The side of the transparent surface 210 on which the foot being photographed is placed is called a first side A of the transparent surface, and the side opposite to the first side A of the transparent surface is called a second side B of the transparent surface. The source of laser radiation 110 and the diffractive optical element 120 placed in the line of propagation of the beam of laser light 130 produced by it are arranged to be placed on the second side B of the transparent surface so that the laser patterns 140 spread out by the diffractive optical element 120 as shown in FIG. 1 are projected at least partly on the sole of the foot 220 being photographed. FIG. 2a shows, in a lateral view, the formation of one of a set of laser patterns 140 on the sole of a foot 220 being photographed. The laser patterns 140 may comprise, for example, dots or other shapes. The laser patterns 140 may be projected on the sole of the foot 220 being photographed in the longitudinal direction of the foot, as in FIG. 2a. The longitudinal direction of the foot 220 refers to the direction between the heel and toes of the foot being photographed. Alternatively, the laser patterns 140 may be projected on the sole of the foot 220 being photographed in the width direction of the foot. The width direction of the foot 220 being photographed refers to the direction between the inner side and outer side of the foot being photographed. Laser patterns 140 which are projected on the sole of the foot and follow the shapes of the sole of the foot are captured by a camera 230 that may be placed on the second side B of the transparent surface. In the embodiment depicted in FIG. 2a, the source of laser radiation 110 is placed in front of the foot 220 being photographed. That is not, however, the only possible location for the source of laser radiation 110, but it may be placed anywhere in relation to the foot 220 being photographed provided that the laser patterns 140 spread out by the diffractive optical element 120 are projected at least partly on the sole of the foot 220 being photographed. In FIG. 2a, the camera 230 is placed on the opposite side of the source of laser radiation 110, relative to the foot 220 being photographed, but that is not the only possible location for the camera 230 which may be placed anywhere in relation to the foot 220 being photographed and the source of laser radiation 110, provided that the camera 230 will be able to capture at least part of the laser patterns 140 projected on the sole of the foot. Photographing may be implemented by arranging the camera 230 to take a still image or a video image. Still images may also be taken several in rapid succession, for example to ensure a sharp focus. The objective lens of the camera 230 may be focused automatically on the sole of the foot being photographed so as to produce a sharp image of the laser patterns 140 projected on the sole of the foot. FIG. 2a shows with a dotted line an imaging zone for the camera 230, which is an example of a possible imaging zone.

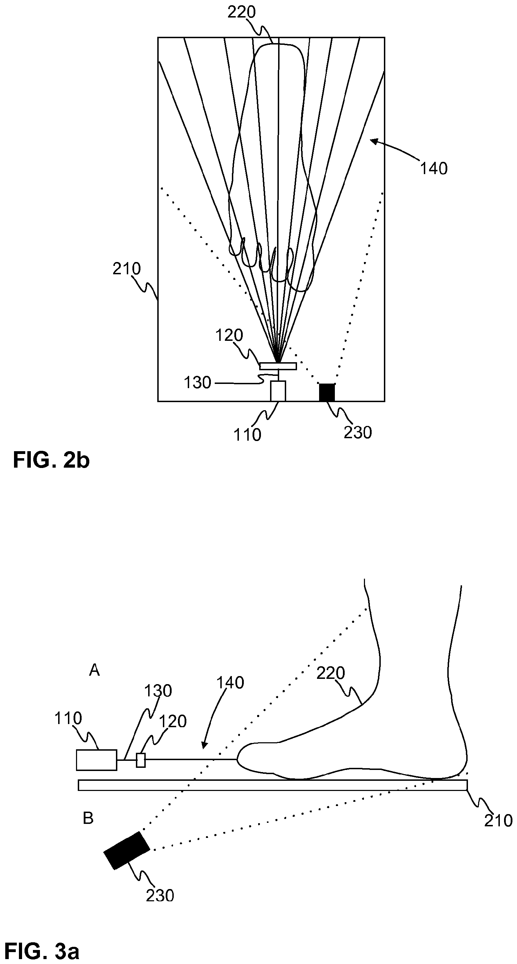

FIG. 2b shows a second embodiment of the apparatus, not covered by the claims, seen from the second side B of the transparent surface towards the sole of the foot 220 being photographed. The embodiment of FIG. 2b is similar to that of FIG. 2a with the exception that in the embodiment of FIG. 2b, the camera 230 and the source of laser radiation 110 are placed on the same side of the foot 220 being photographed, i.e. on the front side of the foot. In FIG. 2b, the laser patterns 140 are projected on the entire sole of the foot 220 being photographed, but it is also possible that the laser patterns 140 are projected only partly on the sole of the foot 220 being photographed, if it is advantageous to photograph only part of the sole of the foot.

In the embodiments according to the invention described above, the set of laser patterns 140 is directed to the sole of the foot 220 being photographed so that the laser patterns 140 projected on the sole of the foot follow the shapes of the sole of the foot. By photographing the laser patterns 140 projected on the sole of the foot it is possible, by analyzing the image, to determine characteristics of the foot 220 being photographed, such as the length or width of the foot, for instance.

FIG. 3a illustrates an embodiment of the apparatus, not covered by the claims, in a side view of the foot 220 being photographed, wherein the foot 220 being photographed is placed against a transparent surface 210. At least one source of laser radiation 110 and a diffractive optical element 120 placed in the line of propagation of the beam of laser light 130 produced by it are arranged to be placed on a first side A of the transparent surface so that at least one laser pattern 140 spread out by the diffractive optical element 120 is projected at least partly on the sole of the foot 220 being photographed. In the embodiment according to FIG. 3a, the at least one laser pattern 140, which may be e.g. a laser line, spread out by the diffractive optical element 120 is projected on the foot 220 being photographed in the width direction of the foot. In FIG. 3a, the camera 230 is placed on the same side as the at least one source of laser radiation 110, relative to the foot 220 being photographed, i.e. on the front side of the foot, but that is not the only possible location for the camera 230 which may be placed anywhere in relation to the foot 220 being photographed and the at least one source of laser radiation 110, provided that the camera 230 will be able to capture at least part of the at least one laser pattern 140 projected on the sole of the foot. The camera 230 may be arranged to be placed on a second side B of the transparent surface, as in the embodiment of FIG. 3a. Alternatively, the camera 230 may be arranged to be placed on the first side A of the transparent surface.

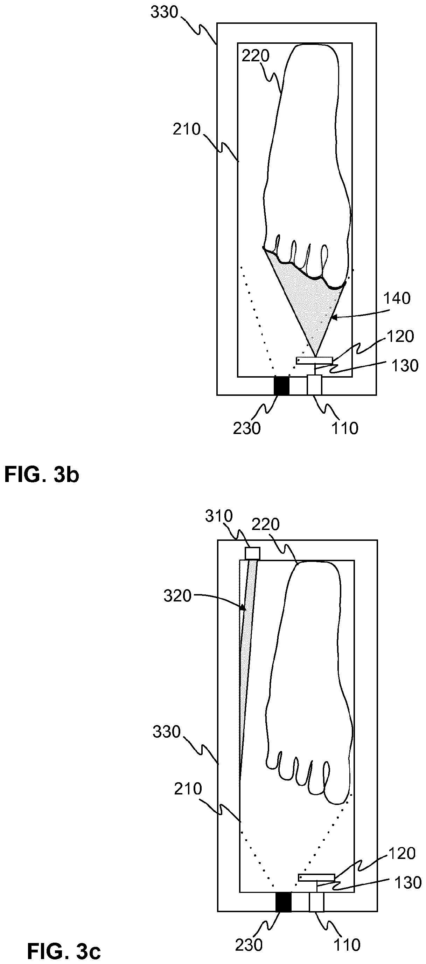

FIG. 3b shows the embodiment of the apparatus shown in FIG. 3a seen from the second side B of the transparent surface towards the sole of the foot 220 being photographed. By analyzing the image captured by a camera 230 it is possible to determine a characteristic of the foot, viz. the length of the foot.

The apparatus according to the invention may also comprise two sources of laser radiation 110 and a diffractive optical element arranged to the placed in the lines of propagation of the beam of laser light 130 produced by each source of laser radiation 110 for spreading out the beam of laser light 130 into at least one laser pattern 140. The two sources of laser radiation may be arranged to be placed so that the beams of laser light 130 produced by them are parallel to each other, but the second source of laser radiation is arranged to be placed at a height different from that of the first source of laser radiation. In other words, the first source of laser radiation and the second source of laser radiation may be placed at a distance from each other in the height direction. The distance in the height direction may be 2-20 millimeters, for example. Advantageously, said distance in the height direction may be 5 millimeters. According to an advantageous embodiment of the invention, the distance between the first source of laser radiation and the transparent surface in the height direction may be 5 millimeters, and the distance between the second source of laser radiation and the first source of laser radiation is 5 millimeters. In that case, the second source of laser radiation is placed 10 millimeters away from the transparent surface. Height direction refers to the direction parallel to the normal of the plane formed by the width direction and longitudinal direction defined above. In the width direction, the first source of laser radiation and the second source of laser radiation may be placed at a distance from each other. The distance in the width direction may be 0.5-8 centimeters, for example. Alternatively, the first source of laser radiation and the second source of laser radiation may be placed at the same spot in the width direction so that, in the width direction, the distance is 0 centimeters. Two sources of laser radiation at different heights enable the projection of a laser pattern on the foot so that it is more certain that the laser pattern is projected at least partly on the longest part of the foot. The advantageous height for the projection of the laser pattern depends on the shape of the foot 220 being photographed. For example, the foot may be at its longest at the big toe so that it may be advantageous to project the laser pattern higher. Alternatively, the foot may be at its longest at another toe so that it may be advantageous to project the laser pattern lower.

FIG. 3c shows an embodiment of the apparatus according to the invention seen from the second side B of the transparent surface towards the sole of the foot 220 being photographed. The embodiment of FIG. 3c is similar to the embodiments of Figs. 3a and 3b with the exception that the apparatus according to the invention comprises at least one additional light source 310. The apparatus according to the invention may also be implemented so as to utilize walls 330 arranged in the apparatus on the outer edges of the transparent surface, the walls extending above the transparent surface on at least the first side A of the transparent surface. The walls in the longitudinal direction of the foot are side walls, the wall in the transverse, i.e. width, direction of the foot in the front side of the foot is the front wall, and the wall in the transverse direction of the foot on the rear side of the foot is the rear wall. Advantageously, in the embodiment according to FIG. 3b, the foot being photographed may be placed so that the heel of the foot 220 is placed against the rear wall. Alternatively, if at least one source of laser radiation 110 is arranged to be placed behind the foot 220, i.e. on the heel side of the foot, the foot 220 may be placed so that the frontal part of the foot 220 is arranged against the front wall. In the embodiment according to FIG. 3c, the outer side or, alternatively, the inner side of the foot 220 being photographed may be advantageously arranged against one of the side walls. The at least one additional light source 310 may be e.g. one of the following: an LED light, infrared light, fluorescent light or halogen light. Advantageously, at least one additional light source 310 is an LED light. The at least one additional light source 310 is arranged to be placed in such a way that the beam of light 320 produced by it is directed to one side wall of the apparatus according to the invention. If the outer side or inner side of the foot 220 being photographed is arranged to be placed against a side wall, then the beam of light 320 produced by the at least one additional light source 310 may be advantageously directed to the opposite side wall. In FIG. 3c, the at least one additional light source 310 is placed on the side opposite to the at least one source of laser radiation 110 in relation to the foot 220 being photographed, but that is not the only possible location for the at least one additional light source 310 which may be placed anywhere provided that the beam of light 320 produced by it is directed to one side wall of the apparatus according to the invention. Advantageously the at least one additional light source 310 is arranged to be placed on the first side A of the transparent surface. Alternatively, the at least one additional light source 310 may be arranged to be placed on the second side B of the transparent surface.

By photographing, with the camera 230, the sole of the foot 220 being photographed and the beam of light 320 directed to at least one side wall so that the beam of light produced by the at least one additional light source 310 is directed to a side wall of the apparatus according to the invention, it is possible, by analyzing the image, to determine a characteristic of the foot, viz. the width of the foot. Alternatively or additionally, the camera 230 may simultaneously photograph at least part of the at least one laser pattern 140 projected on the sole of the foot 220 being photographed. In that case, by analyzing the image captured by the camera 230 it is possible to determine the length and width of the foot at the same time. Advantageously, the laser pattern from the source of laser radiation is not projected on the sole of the foot 220 being photographed simultaneously, so that the beams of light and/or patterns of light produced by the different light sources will not disturb the determination of the different characteristics of the foot 220 being photographed.

The inventional idea according to the invention may also be applied in an application where it is necessary to determine at least one characteristic of the arch of the foot either by itself or together with at least one other characteristic to be measured, such as the length or width of the foot. Next, the invention is described in an application where the at least one characteristic of the arch of the foot 220 to be measured is the height of the arch. For measuring the height of the arch of the foot, a second set of laser patterns 440 is arranged to be directed to the arch of the foot. The second set of laser patterns may be directed to the arch of the foot 220 directly or via a reflective element 401. Below, the invention is illustrated by means of an arrangement in which a second set of laser patterns 440 directed to the arch of the foot is generated prior to being directed with a reflective element 410 by a second diffractive optical element 420 arranged in the direction of propagation of a second beam of laser light 430, wherein the second beam of laser light 430 is produced by one of the following: a beam of laser light separated from the first set of laser patterns 140, a beam of laser light produced by a second source of laser radiation 460. The reflective element 410, which may be e.g. a mirror, may be placed either on a first side A or on a second side B of the transparent surface so that the reflective element 410 is arranged to direct the reflected second set of laser patterns 450 at least partly to the arch of the foot 220 being photographed.

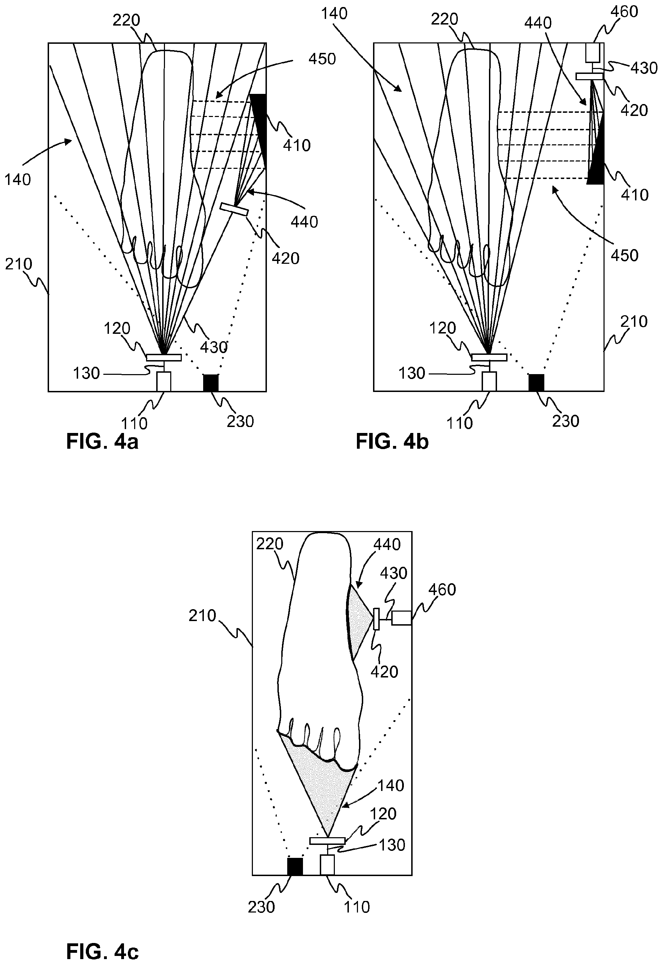

FIG. 4a shows an embodiment of the apparatus according to the invention, where the second beam of laser light 430 comprises a beam of laser light separated from the first set of laser patterns 140. In the embodiment of FIG. 4a, the reflective element 410 may advantageously be arranged to be placed so that only the laser patterns 440 spread out from one beam of laser light separated from the first set of laser patterns 140 are reflected by the reflective element 410. The angle at which the reflective surface of the reflective element 410 is arranged relative to the second set of laser patterns 440, and the angle of the second diffractive optical element 420 relative to the second beam of laser light 430 are such that the reflected second set of laser patterns 450 may be projected on the arch of the foot 220 being photographed. In addition, the angle of installation relative to the second set of laser patterns 440 may be optimized by means of shaping the reflective surface of the reflective element 410.

In an embodiment according to the invention depicted in FIG. 4b, the second beam of laser light 430 is produced from the beam of laser light of the second source of laser radiation 460. The second source of laser radiation 460 is arranged to be placed on the opposite side of the first source of laser radiation 110 in relation to the foot 220 being photographed. The second source of laser radiation 460 may be arranged to be placed advantageously so that the second set of laser patterns 440 is directed to the reflective element 410 only. In other words, the laser patterns 140 of the first set of laser patterns are arranged on the sole of the foot 220, and the reflected laser patterns 450 of the second set of laser patterns are arranged on the arch of the foot 220 being photographed. The reflective element 410 may be arranged to be placed advantageously so that only the laser patterns 440 spread out from a beam of laser light 430 produced by the second source of laser radiation 460 are reflected by the reflective element 410. In the embodiments of the invention depicted in FIGs. 4a and 4b, the camera 230 is arranged to be placed beside the first source of laser radiation 110. The camera 230 may also be arranged to be placed anywhere in relation to the foot 220 being photographed and the source of laser radiation 110 provided that the camera 230 will be able to capture at least part of the laser patterns 140 of the first set of laser patterns which are projected on the sole of the foot 220 and follow the shapes of the sole of the foot 220 being photographed. In addition, the camera 230 may also be used to photograph at least part of the reflected laser patterns 450 of the second set of laser patterns which are projected on the arch of the foot 220 and follow the shapes of the arch of the foot 220 being photographed.

FIG. 4c illustrates the invention by means of an arrangement in which at least one second laser pattern 440 is formed from a beam of laser light 430 of the second source of laser radiation 460 and directed directly at the arch of the foot 220. The second source of laser radiation 460 is arranged to be placed on the arch side of the foot 220 being photographed. The second source of laser radiation 460 may be arranged to be placed advantageously so that the at least one second laser pattern 440 spread out by the second diffractive optical element 420 is directed to the arch of the foot 220 being photographed. Advantageously, the second source of laser radiation 460 may be arranged to be placed on the second side B of the transparent surface. Alternatively, the second source of laser radiation 460 may be arranged to be placed on the first side A of the transparent surface. In the embodiment according to FIG. 4c, the at least one second laser pattern 440, which may be e.g. a laser line, spread out by the diffractive optical element 420 is projected on the arch of the foot 220 in the longitudinal direction of the foot being photographed. In the embodiment of the invention depicted in FIG. 4c, the camera 230 is arranged to be placed beside the first source of laser radiation 110. The camera 230 may also be arranged to be placed anywhere in relation to the foot 220 being photographed and the source of laser radiation 110 provided that the camera 230 will be able to capture at least part of the at least one laser patterns 140 projected on the sole of the foot 220 being photographed. In addition, the camera 230 may also be used to photograph at least part of the at least one second laser pattern 440 projected on the arch of the foot 220 being photographed.

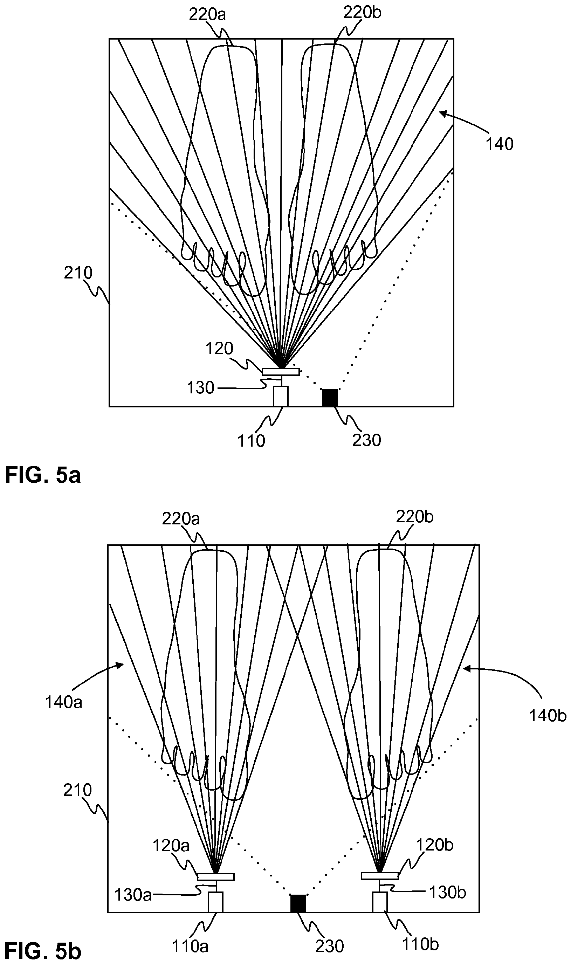

The inventional idea according to the invention may also be applied for producing measurement data of two feet 220a, 220b. FIG. 5a illustrates an embodiment of the apparatus, wherein the apparatus is used for photographing two feet 220a, 220b by means of one source of laser radiation 110 in connection with a diffractive optical element 120 so that the spread-out laser patterns 140 are projected at least partly on the soles of both feet 220a, 220b, following the shapes of the both soles. The camera 230 is placed on the same side, i.e. on the front side, of the feet 220a, 220b with the source of laser radiation 110. That is not, however, the only possible location for the camera 230 which may be placed anywhere in relation to the feet 220a, 220b being photographed and the source of laser radiation 110, so that the camera 230 will be able to capture at least part of the laser patterns 140 projected on the soles of both feet. FIG. 5b illustrates the photographing of two feet 220a, 220b by means of two different sources of laser radiation 110a, 110b where a separate diffractive optical element 120a, 120b is arranged to be placed in the line of propagation of the beam of laser light 130a, 130b produced by each source of laser radiation 110a, 110b to spread out the beam of laser light 130a, 130b so that the spread-out laser patterns 140a, 140b are projected at least partly on the sole of the foot 220a, 220b being photographed. In other words, a first set of laser patterns 140a produced by one source of laser radiation 110a and a diffractive optical element 120a is arranged to be projected on the sole of a first foot 220a, and a second set of laser patterns 140b produced by a second source of laser radiation 110b and a diffractive optical element 120b is arranged to be projected on the sole of a second foot 220b. A camera 230 is used to photograph at least part of the laser patterns 140a, 140b projected on the soles of both feet 220a, 220b. In FIG. 5b, the camera 230 is placed between the sources of laser radiation 110a, 110b, but that is not, however, the only possible location for the camera 230 which may be arranged to be placed anywhere in relation to the feet 220a, 220b being photographed and the sources of laser radiation 110a, 110b, so that it will be able to capture at least part of the laser patterns projected on the soles of both feet 220a, 220b.

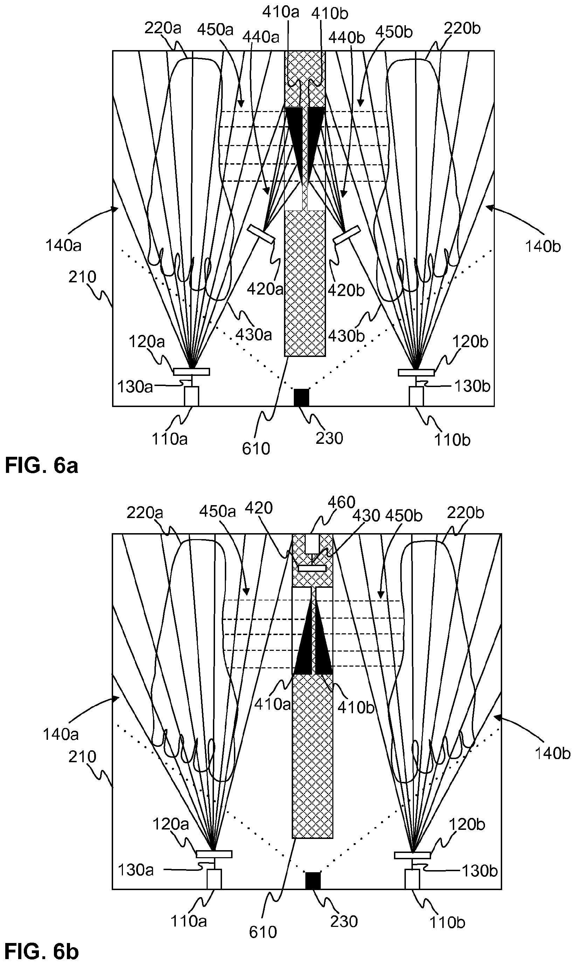

An apparatus according to the invention which comprises producing measurement data of the sole and arch of a foot 220 may also be used for producing measurement data of two feet 220a, 220b. FIG. 6a shows an embodiment of the apparatus according to the invention for photographing the soles and arches of two feet 220a, 220b, comprising two devices depicted in FIG. 4a, arranged as mirror images of one another. A camera 230 is used to photograph at least part of the laser patterns 140a, 140b projected on the soles and arches of both feet 220a, 220b being photographed. In FIG. 6a, the camera 230 is placed between two sources of laser radiation 110a, 110b, but that is not, however, the only possible location for the camera 230 which may be arranged to be placed anywhere in relation to the feet 220a, 220b being photographed and the sources of laser radiation 110a, 110b, so that it will be able to capture at least part of the laser patterns projected on the soles and arches of the feet 220a, 220b being photographed. A middle structure 610 may be arranged to be placed between the feet 220a, 220b being photographed, against the surface on a first side A of the transparent surface, to support reflective elements 410a, 410b.

FIG. 6b shows a second alternative embodiment for photographing the soles and arches of two feet 220a, 220b by means of an apparatus according to the invention, comprising two sources of laser radiation 110a, 110b with a separate diffractive optical element 120a, 120b placed in the line of propagation of the beam of laser light 130a, 130b produced by each source of laser radiation 110a, 110b to spread out the beam of laser light 130a, 130b so that the spread-out laser patterns 140a, 140b are projected at least partly on the sole of one foot 220a, 220b being photographed. Furthermore, a third source of laser radiation 460 produces a third beam of laser light 430 so that a third diffractive optical element 420 may be arranged to be placed in its line of propagation to spread out the beam of laser light 430. The spread-out laser patterns are directed to two reflective elements 410a, 410b so that, by means of a first reflective element 410a, part of the laser pattern is projected at least partly on the arch of a first foot 220a, and some of the laser patterns are projected, by means of a second reflective element 410b, at least partly on the arch of a second foot 220b. For clarity, FIG. 6b shows only those spread-out laser patterns 450a, 450b that are projected on the foot 220a, 220b via the reflective element 410a, 410b. In FIG. 6b, the camera 230 is arranged to be placed between two sources of laser radiation 110a, 110b. That is, however, not the only possible location for the camera 230 which may be arranged to be placed anywhere in relation to the feet 220a, 220b being photographed and the sources of laser radiation 110a, 110b, so that it will be able to capture at least part of the laser patterns 140a, 140b, 450a, 450b projected on the soles and arches of both feet 220a, 220b being photographed.

Alternatively or in addition, the inventional idea according to the embodiments of the invention depicted in FIGs. 3a-3c and 4c may also be applied for producing measurement data of two feet 220a, 220b instead of one foot 220. A middle structure 610 may be arranged to be placed between the feet 220a, 220b being photographed, against the surface on a first side A of the transparent surface. The inner sides of the feet 220a, 220b being photographed may be advantageously arranged to be placed against the middle structure so that the beams of light 320 produced by additional light sources 310 may be advantageously directed to the side walls. Alternatively, the outer sides of the feet 220a, 220b may be arranged to be placed against the side walls so that the beams of light 320 produced by the additional light sources 310 may be advantageously directed to the middle structure.

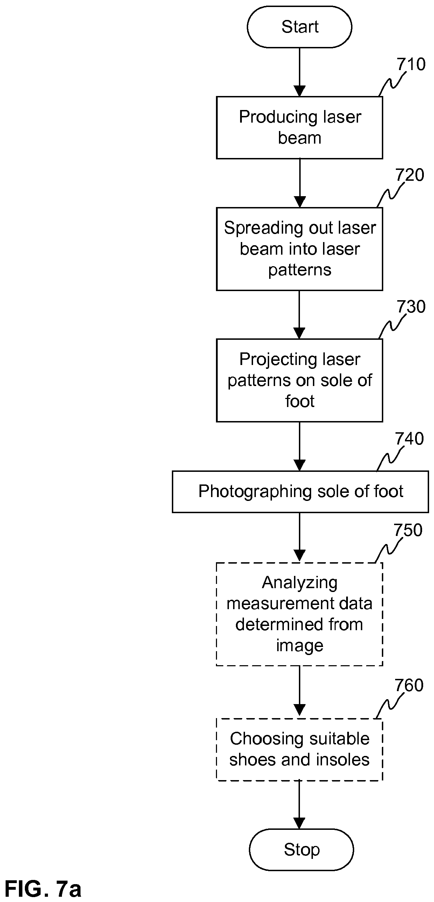

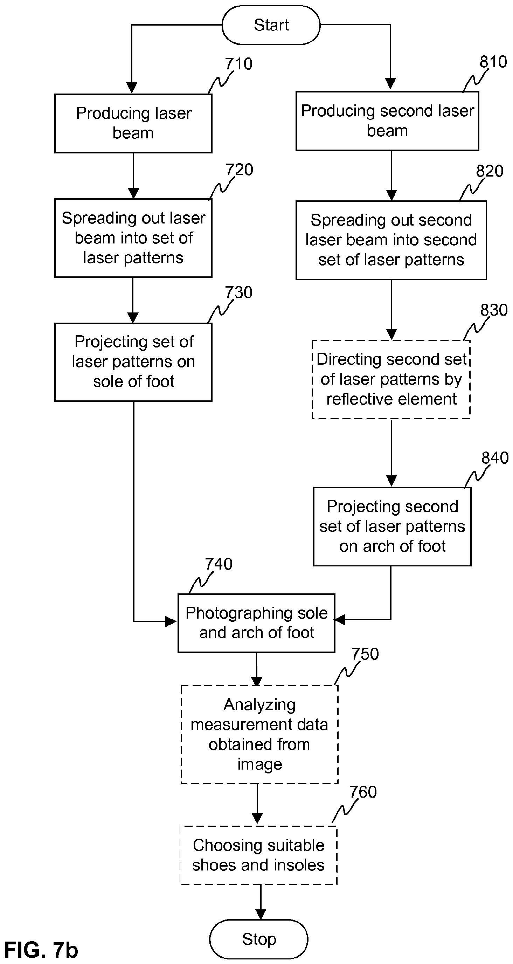

FIG. 7a illustrates in the form of a block diagram a method according to the invention for producing measurement data of a foot. A beam of laser light is produced 710 by a source of laser radiation and spread out into a set of laser patterns 720 by a diffractive optical element. Laser patterns which are projected on the sole of the foot being photographed 730 and which follow the shapes of the foot are photographed by a camera 740. Following the photographing of the foot, the method according to the invention may continue with analysis of the measurement data 750 determined from the photograph and, furthermore, at least one characteristic of the foot may be calculated by means of triangulation from the photographed laser pattern following the shapes of the foot, i.e. from the changes and distances in the pattern. Possible characteristics of the foot to determine may be, for example, the length or the width of the foot, or the height of the arch of the foot. Based on the characteristics of the foot that have been determined, it will be possible, for example, to choose a shoe or insole which is suitable and of the right size for the foot being photographed 760. The block diagram in FIG. 7b illustrates a method according to the invention for photographing a foot, where, in addition to the sole of the foot, also the arch of the foot is photographed. In addition to the laser patterns projected on the sole of the foot, a second beam of laser light is produced 810, which second beam of laser light is spread out into a second set of laser patterns 820 by a second diffractive optical element. The second beam of laser light may be formed either by one beam of laser light separated from the first set of laser patterns or by a beam of laser light produced by a second source of laser radiation. The second set of laser patterns may be directed by means of a reflective element 830 to the arch of the foot being photographed so that the second set of laser patterns is projected on the arch 840 following the shapes of the arch. Alternatively, the second set of laser patterns may be projected directly on the arch of the foot without a reflective element. Both the first laser patterns projected on the sole of the foot and the second laser patterns projected on the arch of the foot are photographed 740 with a camera. The potential post-photography steps of the method depicted in the block diagram of FIG. 7a, concerning the analysis of the measurement data 750 determined from the photograph and the choice of suitable shoes and insoles 760, may be also applied directly to a method according to the invention for photographing a foot where, in addition to the sole of the foot, also the arch of the foot is photographed.

In addition, the method according to the invention may also comprise a step for producing a beam of light by means of at least one additional light source. The beam of light produced by means of the at least one additional light source is directed to at least one side wall of the apparatus according to the invention.

The apparatus and method according to the invention for photographing a foot are suitable for photographing a foot both without a sock and with a sock. For the method, the color of the sock or the texture on it are irrelevant. The method steps described above for photographing one foot are directly applicable to photographing two feet.

The apparatus described above may be advantageously arranged to have the necessary means of control for producing the light from a light source and capturing the image on a camera. If necessary, also the optical element may be controlled, if it is a functional unit. In that case, power supply is arranged for the above-mentioned elements.

The invention also relates to a system, an embodiment of which comprises an apparatus and control unit described above. With the control unit it is possible, either manually by the user or someone else or automatically, to control the sources of laser radiation and camera in the apparatus described earlier in this application. The control unit may be implemented in the apparatus described earlier in this application or it may be a separate device which is communicatively connected to the apparatus described earlier in this application and which receives the measurement information either wirelessly or through a wire and processes it. A few non-limiting examples of separate control units include, for example, a personal computer, laptop computer, and tablet computer. The control unit comprises at least one processor, at least one memory for storing parts of computer program code and data, a communication interface and at least one user interface unit. The communication interface provides an interface for communication with any external unit, such as the apparatus described earlier in this application, database and/or external systems, for instance. The communication interface may be based on one or more known communication technologies, which may be either wired or wireless, to communicate the information described above. The user interface unit may be implemented either in connection with the control unit or in connection with the apparatus described earlier in this application, or it may be a separate unit communicatively connected to at least one of the following: the control unit, the apparatus according to the invention. The user interface unit may be configured, for example, to receive control information from the user and/or transmit information generated from the measurement data to the user. For clarity, a processor refers, in this description, to any unit suitable for information processing and controlling the functions of the control unit. The memory is not limited to a certain type of memory, but any type of memory may be used with the apparatus described as long as it is suitable for storing the information described.

The processor in the control unit is configured to implement at least part of the method steps described above. The selection of suitable shoes or insoles on the basis of analysis of the measurement data may be carried out automatically by the control unit. On the basis of the analysis of the measurement data it is also possible, for example, to control an apparatus for making customized insoles, such as e.g. a 3D printer, to produce a customized insole for the foot measured. In addition, the control unit may be configured to filter out from the measurement data incorrect laser patterns projected on the sole or arch of the foot. Incorrect laser patterns may be laser patterns produced directly by other source of laser radiation and diffractive optical element, or laser patterns produced by other source of laser radiation and diffractive optical element and reflected via a reflective element.

The invention also relates to a system that comprises an apparatus for producing measurement data of a foot and a control unit for processing the measurement data.

In the embodiments according to the invention depicted in the drawings, the distances, angles and scales of laser patterns and other features are not precise but meant for illustrative purposes only.

In the description, laser light is used as the light source, but other light sources are also possible if the sets of lights produced by them and the optical element may be projected on the foot and the patterns of light may be photographed with a camera. In addition to the optical element, also a filter may be used to spread out the set of lights from the beam of light produced by the light source. The light may be visible, such as laser light, LED light, fluorescent light, incandescent light, or it may be invisible, such as infrared light, for instance. For enabling the photographing of the projected patterns of light when using invisible light, it is possible to use in connection with the camera a filter operating on the wavelengths of the light used. Similarly, the optical element and camera are selected in accordance with the light source used so that the patterns of light on the foot may be photographed as described.

A power source is arranged for the apparatus and/or control unit described above to supply power for the functional elements described in this application, such as the light source, camera, control unit and optical element, if necessary. If the apparatus comprises other elements, power may be supplied to these, too. The power source may comprise, for example, mains electricity or an energy-storing unit, such as a battery. To maintain clarity, the power source and other components possibly associated with it are not described in the drawings or in the description of the invention.

## Claims

1. An apparatus for producing measurement data of a foot (220, 220a, 220b), wherein the foot (220, 220a, 220b), when being photographed, is placed against a transparent surface (210) on a first side (A) of the transparent surface, **characterized in that** the apparatus comprises:
- at least one light source (110, 110a, 110b),
- at least one optical element (120, 120a, 120b) arranged to be placed in the line of propagation of a beam of light (130, 130a, 130b) produced by the at least one light source (110, 110a, 110b) for spreading out the beam of light (130, 130a, 130b) into a set of patterns of light (140, 140a, 140b) so that the patterns of light (140, 140a, 140b) are projected directly from the optical element at least partly on the sole of the foot (220, 220a, 220b) placed for photography for determining the length of the foot,
- at least one additional light source (310) for producing a beam of light (320) directed to at least one side wall of the apparatus for determining the width of the foot, wherein the at least one additional light source (310) is an LED light, and
- a camera (230) for photographing directly the patterns of light (140, 140a, 140b) which are projected on at least the sole of the foot (220, 220a, 220b) placed for photography and which follow the shapes of the sole of the foot and the beam of light (320) produced by the at least one additional light source (310) directed to at least one side wall simultaneously or at different time.

2. An apparatus according to claim 1 for producing measurement data of a foot (220, 220a, 220b), wherein the divergence angle of the optical element (120, 120a, 120b) defines the diffraction of the patterns of light.

3. An apparatus according to any one of the preceding claims for producing measurement data of a foot (220, 220a, 220b), wherein at least one light source (110, 110a, 110b) and a camera (230) are placed in such mutual relationship that the image information obtained from the camera (230) enables determination of at least one characteristic of the foot (220, 220a, 220b) through triangulation.

4. An apparatus according to any one of the preceding claims for producing measurement data of a foot (220, 220a, 220b), further comprising a second set of patterns of light (440, 440a, 440b) directed at least partly to the arch of the foot (220, 220a, 220b) placed for photography.

5. An apparatus according to claim 4 for producing measurement data of a foot (220, 220a, 220b), wherein the second set of patterns of light (440, 440a, 440b) is arranged to be produced by means of a second optical element (420, 420a, 420b) arranged in the direction of propagation of a second beam of light (430, 430a, 430b).

6. An apparatus according to claim 5 for producing measurement data of a foot (220, 220a, 220b), wherein the second beam of light (430, 430a, 430b) is provided by one of the following: one beam of light separated from the first set of patterns of light (140, 140a, 140b), a beam of light produced by a second light source (460).

7. An apparatus according to any one of claims 4-6 for producing measurement data of a foot (220, 220a, 220b), wherein said second set of patterns of light (440, 440a, 440b) is arranged to the arch of the foot (220, 220a, 220b) placed for photography by at least one of the following: the second light source (460) and second optical element (420), at least one reflective element (410, 410a, 410b).

8. An apparatus according to any one of the preceding claims for producing measurement data of a foot (220, 220a, 220b), wherein said at least one light source (110, 110a, 110b, 460) is a source of laser radiation.

9. An apparatus according to any one of the preceding claims for producing measurement data of a foot (220, 220a, 220b), wherein said at least one optical element (120, 120a, 120b, 420, 420a, 420b) is a diffractive optical element.

10. An apparatus according to any one of the preceding claims for producing measurement data of a foot (220, 220a, 220b), wherein the apparatus comprises two light sources (110, 110a, 110b) and an optical element arranged to be placed in the line of propagation of the beam of light (130, 130a, 130b) produced by each light source (110, 110a, 110b) for spreading out the beam of light (130, 130a, 130b) into at least one pattern of light (140, 140a, 140b), where the two light sources (110, 110a, 110b) are arranged at a distance from each other in the height direction.

11. An apparatus according to claim 10 for producing measurement data of a foot (220, 220a, 220b), wherein the distance between the two light sources (110, 110a, 110b) in the height direction is 2-20 millimeters.

12. A method for producing measurement data of a foot (220, 220a, 220b), wherein the foot (220, 220a, 220b), when being photographed, is placed against a transparent surface (210) on a first side (A) of the transparent surface, **characterized in that** the method comprises:
- spreading out a beam of light (130, 130a, 130b) into a set of patterns of light (140, 140a, 140b) by at least one optical element (120, 120a, 120b) arranged to be placed in the line of propagation of a beam of light (130, 130a, 130b) produced by at least one light source (110, 110a, 110b),
- projecting the spread-out set of patterns of light (140, 140a, 140b) directly from the optical element at least partly on the sole of the foot (220, 220a, 220b) placed for photography for determining the length of the foot,
- producing a beam of light (320) by at least one additional light source (310), wherein the at least one additional light source (310) is an LED light,
- directing the beam of light (320) produced by the additional light source (310) to at least one side wall for determining the width of the foot, and
- photographing, directly by means of a camera (230), the patterns of light (140, 140a, 140b) which are projected on the sole of the foot (220, 220a, 220b) placed for photography and which follow the shapes of the sole of the foot and the beam of light (320) produced by the at least one additional light source (310) directed to at least one side wall simultaneously or at different time.

13. A method according to claim 12 for producing measurement data of a foot (220, 220a, 220b), the method further comprising:
- producing a second beam of light (430, 430a, 430b) by means of one of the following: a beam of light separated from the first set of patterns of light (140, 140a, 140b), a beam of light produced by a second light source (460),
- producing a second set of patterns of light (440, 440a, 440b) by means of a second optical element (420, 420a, 420b) arranged in the direction of propagation of the second beam of light (430, 430a, 430b), and
- directing the second set of patterns of light (440, 440a, 440b) at least partly to the arch of the foot (220, 220a, 220b) placed for photography by means of the second light source (460) and second optical element (420), or by means of at least one reflective element (410, 410a, 410b).

14. A method according to any one of claims 12-13 for producing measurement data of a foot (220, 220a, 220b), wherein a suitable and fitting shoe or insole is chosen for the foot (220, 220a, 220b) placed for photography on the basis of foot characteristics determined.

15. A system for analyzing a foot (220, 220a, 220b), **characterized in that** the system comprises:
- an apparatus according to claim 1 for producing measurement data, and
- a control unit for processing measurement data.

## Patentansprüche

1. Einrichtung zum Produzieren von Messdaten eines Fußes (220, 220a, 220b), wobei der Fuß (220, 220a, 220b), wenn er fotografiert wird, gegen eine transparente Oberfläche (210) auf einer ersten Seite (A) der transparenten Oberfläche platziert ist, **dadurch gekennzeichnet, dass** die Einrichtung Folgendes umfasst:
- wenigstens eine Lichtquelle (110, 110a, 110b),
- wenigstens ein optisches Element (120, 120a, 120b), das dazu eingerichtet ist, in der Propagationslinie eines Lichtstrahls (130, 130a, 130b) platziert zu werden, der durch wenigstens eine Lichtquelle (110, 110a, 110b) produziert wird, zum Auffächern des Lichtstrahls (130, 130a, 130b) in einen Satz von Lichtmustern (140, 140a, 140b), so dass die Lichtmuster (140, 140a, 140b) direkt von dem optischen Element wenigstens teilweise auf die Sohle des Fußes (220, 220a, 220b) projiziert werden, der zur Fotografie platziert ist, um eine Länge des Fußes zu bestimmen,
- wenigstens eine zusätzliche Lichtquelle (310) zum Produzieren eines Lichtstrahls (320), der auf wenigstens eine Seitenwand der Einrichtung gelenkt wird, zum Bestimmen der Breite des Fußes, wobei die wenigstens eine zusätzliche Lichtquelle (310) ein LED-Licht ist, und
- eine Kamera (230) zum direkten Fotografieren der Lichtmuster (140, 140a, 140b), die auf wenigstens die Sohle des Fußes (220, 220a, 220b) projiziert werden, der zur Fotografie platziert ist, und die den Formen der Sohle des Fußes folgen, und des Lichtstrahls (320), der durch die wenigstens eine zusätzliche Lichtquelle (310) produziert wird und zu wenigstens einer Seitenwand gelenkt wird, gleichzeitig oder zu einer anderen Zeit.

2. Einrichtung nach Anspruch 1 zum Produzieren von Messdaten eines Fußes (220, 220a, 220b), wobei der Divergenzwinkel des optischen Elements (120, 120a, 120b) die Beugung der Lichtmuster definiert.

3. Einrichtung nach einem der vorhergehenden Ansprüche zum Produzieren von Messdaten eines Fußes (220, 220a, 220b), wobei wenigstens eine Lichtquelle (110, 110a, 110b) und eine Kamera (230) in einer solchen gemeinsamen Beziehung platziert sind, dass die von der Kamera (230) erhaltenen Bildinformationen eine Bestimmung wenigstens einer Charakteristik des Fußes (220, 220a, 220b) durch Triangulation ermöglichen.

4. Einrichtung nach einem der vorhergehenden Ansprüche zum Produzieren von Messdaten eines Fußes (220, 220a, 220b), die ferner einen zweiten Satz von Lichtmustern (440, 440a, 440b) umfasst, die wenigstens teilweise zu dem Gewölbe des Fußes (220, 220a, 220b) gelenkt werden, der zur Fotografie platziert ist.

5. Einrichtung nach Anspruch 4 zum Produzieren von Messdaten eines Fußes (220, 220a, 220b), wobei der zweite Satz von Lichtmustern (440, 440a, 440b) dazu eingerichtet ist, mittels eines zweiten optischen Elements (420, 420a, 420b) produziert zu werden, das in der Propagationsrichtung eines zweiten Lichtstrahls (430, 430a, 430b) angeordnet ist.

6. Einrichtung nach Anspruch 5 zum Produzieren von Messdaten eines Fußes (220, 220a, 220b), wobei der zweite Lichtstrahl (430, 430a, 430b) durch eines von Folgendem bereitgestellt wird: einen Lichtstrahl, der von dem ersten Satz von Lichtmustern (140, 140a, 140b) separiert wird, einen Lichtstrahl, der durch eine zweite Lichtquelle (460) produziert wird.

7. Einrichtung nach einem der Ansprüche 4-6 zum Produzieren von Messdaten eines Fußes (220, 220a, 220b), wobei der zweite Satz von Lichtmustern (440, 440a, 440b) für das Gewölbe des Fußes (220, 220a, 220b), der zur Fotografie platziert ist, durch wenigstens eines von Folgendem eingerichtet wird: die zweite Lichtquelle (460) und das zweite optische Element (420), wenigstens ein reflektierendes Element (410, 410a, 410b).

8. Einrichtung nach einem der vorhergehenden Ansprüche zum Produzieren von Messdaten eines Fußes (220, 220a, 220b), wobei die wenigstens eine Lichtquelle (110, 110a, 110b, 460) eine Quelle von Laserstrahlung ist.

9. Einrichtung nach einem der vorhergehenden Ansprüche zum Produzieren von Messdaten eines Fußes (220, 220a, 220b), wobei das wenigstens eine optische Element (120, 120a, 120b, 420, 420a, 420b) ein diffraktives optisches Element ist.

10. Einrichtung nach einem der vorhergehenden Ansprüche zum Produzieren von Messdaten eines Fußes (220, 220a, 220b), wobei die Einrichtung zwei Lichtquellen (110, 110a, 110b) und ein optisches Element umfasst, das dazu eingerichtet ist, in der Propagationslinie des Lichtstrahls (130, 130a, 130b), der durch jede Lichtquelle (110, 110a, 110b) produziert wird, zum Auffächern des Lichtstrahls (130, 130a, 130b) in wenigstens ein Lichtmuster (140, 140a, 140b) platziert zu werden, wobei die zwei Lichtquellen (110, 110a, 110b) in einem Abstand voneinander in der Höhenrichtung platziert sind.

11. Einrichtung nach Anspruch 10 zum Produzieren von Messdaten eines Fußes (220, 220a, 220b), wobei die Entfernung zwischen den zwei Lichtquellen (110, 110a, 110b) in der Höhenrichtung 2-20 Millimeter beträgt.

12. Verfahren zum Produzieren von Messdaten eines Fußes (220, 220a, 220b), wobei der Fuß (220, 220a, 220b), wenn er fotografiert wird, gegen eine transparente Oberfläche (210) auf einer ersten Seite (A) der transparenten Oberfläche platziert wird, **dadurch gekennzeichnet, dass** das Verfahren Folgendes umfasst:
- Auffächern eines Lichtstrahls (130, 130a, 130b) in einen Satz von Lichtmustern (140, 140a, 140b) durch wenigstens ein optisches Element, das dazu eingerichtet ist, in der Propagationslinie eines Lichtstrahls (130, 130a, 130b) platziert zu werden, der durch wenigstens eine Lichtquelle (110, 110a, 110b) produziert wird,
- Projizieren des aufgefächerten Satzes von Lichtmustern (140, 140a, 140b) direkt von dem optischen Element wenigstens teilweise auf die Sohle des Fußes (220, 220a, 220b), der zur Fotografie platziert ist, um eine Länge des Fußes zu bestimmen,
- Produzieren eines Lichtstrahls (320) durch wenigstens eine zusätzliche Lichtquelle (310), wobei die wenigstens eine zusätzliche Lichtquelle (310) ein LED-Licht ist, und
- Lenken des Lichtstrahls (320), der durch die zusätzliche Lichtquelle (310) produziert wird, auf wenigstens eine Seitenwand zum Bestimmen der Breite des Fußes, und
- Fotografieren, direkt mittels einer Kamera (230), der Lichtmuster (140, 140a, 140b), die auf die Sohle des Fußes (220, 220a, 220b) projiziert werden, der zur Fotografie platziert ist, und die den Formen der Sohle des Fußes folgen, und des Lichtstrahls (320), der durch die wenigstens eine zusätzliche Lichtquelle (310) produziert wird und zu wenigstens einer Seitenwand gelenkt wird, gleichzeitig oder zu einer anderen Zeit.

13. Verfahren nach Anspruch 12 zum Produzieren von Messdaten für einen Fuß (220, 220a, 220b), wobei das Verfahren ferner Folgendes umfasst:
- Produzieren eines zweiten Lichtstrahls (430, 430a, 430b) mittels eines von Folgendem: eines Lichtstrahls, der von dem ersten Satz von Lichtmustern (140, 140a, 140b) separiert wird, eines Lichtstrahls, der durch eine zweite Lichtquelle (460) produziert wird,
- Produzieren eines zweiten Satzes von Lichtmustern (440, 440a, 440b) mittels eines zweiten optischen Elements (420, 420a, 420b) das in der Propagationsrichtung des zweiten Lichtstrahls (430, 430a, 430b) angeordnet ist, und
- Lenken des zweiten Satzes von Lichtmustern (440, 440a, 440b) wenigstens teilweise zu dem Gewölbe des Fußes (220, 220a, 220b), der zur Fotografie platziert ist, mittels der zweiten Lichtquelle (460) und des zweiten optischen Elements (420) oder mittels wenigstens eines reflektierenden Elements (410, 410a, 410b).

14. Verfahren nach einem der Ansprüche 12-13 zum Produzieren von Messdaten für einen Fuß (220, 220a, 220b), wobei ein geeigneter und passender Schuh oder eine geeignete und passende Einlage für den Fuß (220, 220a, 220b), der zur Fotografie platziert ist, basierend auf bestimmten Fußcharakteristiken ausgewählt wird.

15. System zum Analysieren eines Fußes (220, 220a, 220b), **dadurch gekennzeichnet, dass** das System Folgendes umfasst:
eine Einrichtung nach Anspruch 1 zum Produzieren von Messdaten, und
eine Steuereinheit zum Verarbeiten von Messdaten.

## Revendications

1. Appareil destiné à produire des données de mesure d'un pied (220, 220a, 220b), où le pied (220, 220a, 220b), lorsqu'il est photographié, est placé contre une surface transparente (210) sur un premier côté (A) de la surface transparente, **caractérisé en ce que** l'appareil comprend :
- au moins une source de lumière (110, 110a, 110b),
- au moins un élément optique (120, 120a, 120b) agencé pour être placé dans la ligne de propagation d'un faisceau de lumière (130, 130a, 130b) produit par l'au moins une source de lumière (110, 110a, 110b) pour étaler le faisceau de lumière (130, 130a, 130b) selon un ensemble de motifs de lumière (140, 140a, 140b) de manière à ce que les motifs de lumière (140, 140a, 140b) soient projetés directement depuis l'élément optique sur, au moins partiellement, la plante du pied (220, 220a, 220b) placé pour la photographie afin de déterminer la longueur du pied,
- au moins une source de lumière supplémentaire (310) pour produire un faisceau de lumière (320) dirigé sur au moins une paroi latérale de l'appareil pour déterminer la largeur du pied, où l'au moins une source de lumière supplémentaire (310) est une lumière LED, et
- un appareil photographique (230) pour photographier directement les motifs de lumière (140, 140a, 140b) qui sont projetés sur au moins la plante du pied (220, 220a, 220b) placé pour la photographie et qui suivent les formes de la plante du pied et le faisceau de lumière (320) produit par l'au moins une source de lumière supplémentaire (310) dirigée vers au moins une paroi latérale simultanément ou à des moments différents.

2. Appareil selon la revendication 1 destiné à produire des données de mesure d'un pied (220, 220a, 220b), dans lequel l'angle de divergence de l'élément optique (120, 120a, 120b) définit la diffraction des motifs de lumière.

3. Appareil selon l'une quelconque des revendications précédentes destiné à produire des données de mesure d'un pied (220, 220a, 220b), dans lequel au moins une source de lumière (110, 110a, 110b) et un appareil photographique (230) sont placés dans une relation mutuelle telle que les informations d'image obtenues de l'appareil photographique (230) permettent la détermination d'au moins une caractéristique du pied (220, 220a, 220b) par triangulation.

4. Appareil selon l'une quelconque des revendications précédentes destiné à produire des données de mesure d'un pied (220, 220a, 220b), comprenant en outre un second ensemble de motifs de lumière (440, 440a, 440b) dirigés au moins partiellement vers la voûte plantaire du pied (220, 220a, 220b) placé pour la photographie.

5. Appareil selon la revendication 4 destiné à produire des données de mesure d'un pied (220, 220a, 220b), dans lequel le second ensemble de motifs de lumière (440, 440a, 440b) est agencé pour être produit au moyen d'un second élément optique (420, 420a, 420b) agencé dans la direction de propagation d'un second faisceau de lumière (430, 430a, 430b).

6. Appareil selon la revendication 5 destiné à produire des données de mesure d'un pied (220, 220a, 220b), dans lequel le second faisceau de lumière (430, 430a, 430b) est fourni par l'un des éléments suivants : un faisceau de lumière séparé du premier ensemble de motifs de lumière (140, 140a, 140b), un faisceau de lumière produit par une seconde source de lumière (460) .

7. Appareil selon l'une quelconque des revendications 4 à 6 destiné à produire des données de mesure d'un pied (220, 220a, 220b), dans lequel ledit second ensemble de motifs de lumière (440, 440a, 440b) est agencé sur la voûte plantaire du pied (220, 220a, 220b) placé pour la photographie par au moins l'un des éléments suivants : la seconde source de lumière (460) et un second élément optique (420), au moins un élément réfléchissant (410, 410a, 410b).

8. Appareil selon l'une quelconque des revendications précédentes destiné à produire des données de mesure d'un pied (220, 220a, 220b), dans lequel ladite au moins une source de lumière (110, 110a, 110b, 460) est une source de rayonnement laser.

9. Appareil selon l'une quelconque des revendications précédentes destiné à produire des données de mesure d'un pied (220, 220a, 220b), dans lequel ledit au moins un élément optique (120, 120a, 120b, 420, 420a, 420b) est un élément optique diffractif.

10. Appareil selon l'une quelconque des revendications précédentes destiné à produire des données de mesure d'un pied (220, 220a, 220b), dans lequel l'appareil comprend deux sources de lumière (110, 110a, 110b) et un élément optique agencé pour être placé dans la ligne de propagation du faisceau de lumière (130, 130a, 130b) produit par chaque source de lumière (110, 110a, 110b) pour étaler le faisceau de lumière (130, 130a, 130b) selon au moins un motif de lumière (140, 140a, 140b), où les deux sources de lumière (110, 110a, 110b) sont disposées à distance l'une de l'autre dans le sens de la hauteur.

11. Appareil selon la revendication 10 destiné à produire des données de mesure d'un pied (220, 220a, 220b), dans lequel la distance entre les deux sources de lumière (110, 110a, 110b) dans la direction de la hauteur est de 2 à 20 millimètres.

12. Procédé pour produire des données de mesure d'un pied (220, 220a, 220b), dans lequel le pied (220, 220a, 220b), lorsqu'il est photographié, est placé contre une surface transparente (210) sur un premier côté (A) de la surface transparente, **caractérisé en ce que** le procédé comprend les étapes suivantes :
- étaler un faisceau de lumière (130, 130a, 130b) selon un ensemble de motifs de lumière (140, 140a, 140b) par au moins un élément optique (120, 120a, 120b) agencé pour être placé dans la ligne de propagation d'un faisceau de lumière (130, 130a, 130b) produit par au moins une source de lumière (110, 110a, 110b),
- projeter l'ensemble étalé de motifs de lumière (140, 140a, 140b) directement à partir de l'élément optique sur, au moins partiellement, la plante du pied (220, 220a, 220b) placé pour la photographie afin de déterminer la longueur du pied,
- produire un faisceau de lumière (320) par au moins une source de lumière supplémentaire (310), où l'au moins une source de lumière supplémentaire (310) est une lumière LED,
- diriger le faisceau de lumière (320) produit par la source de lumière supplémentaire (310) vers au moins une paroi latérale pour déterminer la largeur du pied, et
- photographier, directement au moyen d'un appareil photographique (230), les motifs de lumière (140, 140a, 140b) qui sont projetés sur la plante du pied (220, 220a, 220b) placé pour la photographie et qui suivent les formes de la plante du pied et le faisceau de lumière (320) produit par l'au moins une source de lumière supplémentaire (310) dirigée vers au moins une paroi latérale simultanément ou à des moments différents.

13. Procédé selon la revendication 12 destiné à produire des données de mesure d'un pied (220, 220a, 220b), le procédé comprenant en outre les étapes suivantes :
- produire un second faisceau de lumière (430, 430a, 430b) au moyen de l'un des éléments suivants : un faisceau de lumière séparé du premier ensemble de motifs de lumière (140, 140a, 140b), un faisceau de lumière produit par une seconde source de lumière (460),
- produire un second ensemble de motifs de lumière (440, 440a, 440b) au moyen d'un second élément optique (420, 420a, 420b) disposé dans la direction de propagation du second faisceau de lumière (430, 430a, 430b), et
- diriger le second ensemble de motifs de lumière (440, 440a, 440b) au moins partiellement vers la voûte plantaire du pied (220, 220a, 220b) placé pour la photographie au moyen de la seconde source de lumière (460) et du second élément optique (420), ou au moyen d'au moins un élément réfléchissant (410, 410a, 410b).

14. Procédé selon l'une quelconque des revendications 12 et 13 destiné à produire des données de mesure d'un pied (220, 220a, 220b), où une chaussure ou une semelle intérieure appropriée et adaptée est choisie pour le pied (220, 220a, 220b) placé pour la photographie sur la base des caractéristiques du pied déterminées.

15. Système d'analyse d'un pied (220, 220a, 220b), **caractérisé en ce que** le système comprend :
- un appareil selon la revendication 1 destiné à produire des données de mesure, et
- une unité de commande pour traiter les données de mesure.
